# EUROPEAN PATENT APPLICATION

(11) **EP 2 165 751 A1**
(43) Date of publication of application: **24.03.2010**
(21) Application number: 09252169.9
(22) Date of filing: 11.09.2009
(51) Int. Cl.: B01D 61/36

(54) **Membrane distillation pressure control system and method**

(30) Priority: 12.09.2008 US 283597
(71) Applicant: MILTON ROY COMPANY, Ivyland, PA 18974-0577 (US)
(72) Inventor: Ma, Zidu, Ellington, CT 06029 (US); Irish, James R., Middlefield, CT 06455 (US); Liao, Ziaohong, South Windsor, CT 06074 (US)
(74) Representative: Leckey, David Herbert

(57) **Abstract**

A membrane distillation system (10) includes a membrane distillation module (16), a brine loop (12) and a distillate loop (14). The brine loop (12) and the distillate loop (14) each include means for regulating flow of brine solution and distillate, respectively, to the membrane distillation module (16). The flow of brine solution and distillate is regulated to prevent brine solution and distillate from penetrating membranes (20) of the membrane distillation module (16). A method of membrane distillation includes delivering brine solution and distillate to the membrane distillation module (16) at low pressures in a first mode. The method also includes heating the brine solution and cooling the distillate and delivering portions of each to the membrane distillation module (16) in a second mode. The portions of heated brine solution and cooled distillate are adjusted to facilitate membrane distillation while preventing liquid from penetrating membranes (20) of the membrane distillation module (16).

## Description

### BACKGROUND

The present invention relates to membrane distillation systems. In particular, the present invention relates to membrane distillation systems with pressure control.

In recent years, membrane distillation has become increasingly popular in a variety of fluid treatment applications. Membrane distillation is a separation process useful for separating aqueous solutions. For example, membrane distillation may be used to separate purified water from brine or brackish water. Membrane distillation differs from conventional filtration. In filtration, a fluid or mixture of fluids is forced through a filter to yield a permeate. In membrane distillation, an aqueous brine solution is delivered to a membrane and vapor permeates the membrane and is then collected as distillate. Membranes used in membrane distillation are typically hydrophobic and microporous to keep the aqueous brine solution separated from the distillate during operation. Water vapor penetrates and then passes through the pores in the membranes. Due to the hydrophobic nature of the membrane, aqueous brine solutions do not normally penetrate the pores and, therefore, do not pass through the membrane.

### SUMMARY

The present invention relates in broad terms to a membrane distillation system including a membrane distillation module, a brine loop and a distillate loop. The brine loop includes means for regulating flow of brine solution to the membrane distillation module. The distillate loop includes means for regulating flow of distillate to the membrane distillation module. The flow of brine solution and distillate is regulated to prevent brine solution and distillate from penetrating membranes of the membrane distillation module.

The present invention also relates in broad terms to a method for membrane distillation. The method includes delivering in a first mode a brine solution through a brine loop and a distillate through a distillate loop where the brine solution and the distillate bypass a membrane distillation module. The method also includes heating the brine solution and cooling the distillate and delivering a portion of the heated brine solution and a portion of the cooled distillate to the membrane distillation module in a second mode. The portions of heated brine solution and cooled distillate delivered to the membrane distillation module are adjusted to prevent the brine solution and the distillate from penetrating membranes of the membrane distillation module.

### BRIEF DESCRIPTION OF THE DRAWINGS

FIG. 1 is a schematic illustration of a membrane distillation system with pressure control.
FIG. 2 is a schematic illustration of a membrane distillation system using variable frequency drive pumps for pressure control.

### DETAILED DESCRIPTION

During membrane distillation, a brine solution is delivered to one side of a membrane. Distillate (or another fluid) collects and/or recirculates on the opposite side of the membrane. The brine solution is typically preheated to form a temperature differential across the membrane. This temperature differential creates a vapor pressure differential between the brine solution side and the distillate side of the membrane. The vapor pressure differential causes a portion of the brine solution to evaporate near the pore entrance of the membrane on the brine solution side. The vapor enters the pore entrance and transmits through the membrane via a pore channel. The transmitted vapor then condenses in a cool region on the distillate side of the membrane, thereby providing the desired distillate. Depending on the mode of membrane distillation used, the cool region is a gas or liquid interface or a condensing surface on the distillate side of the membrane.

Each membrane used in membrane distillation has a particular liquid penetration pressure. If a liquid is delivered to a membrane at a pressure that exceeds the membrane's liquid penetration pressure, the liquid will penetrate the pores of the membrane, fill the pore channels and potentially pass through the membrane. The liquid penetration pressure for a particular membrane will depend on various factors such as pore size and membrane thickness. Care must be taken during membrane distillation to ensure that the aqueous solution is not delivered to the membrane at a pressure near or above the membrane's liquid penetration pressure. If the aqueous solution penetrates the membrane pores and passes through the membrane, the membrane distillation system may be compromised. Contaminants in the aqueous solution may pass through the membrane and contaminate the collected distillate. Alternatively, the membrane distillation system may stop functioning entirely. The present invention provides for pressure regulation of the solutions delivered to the membrane.

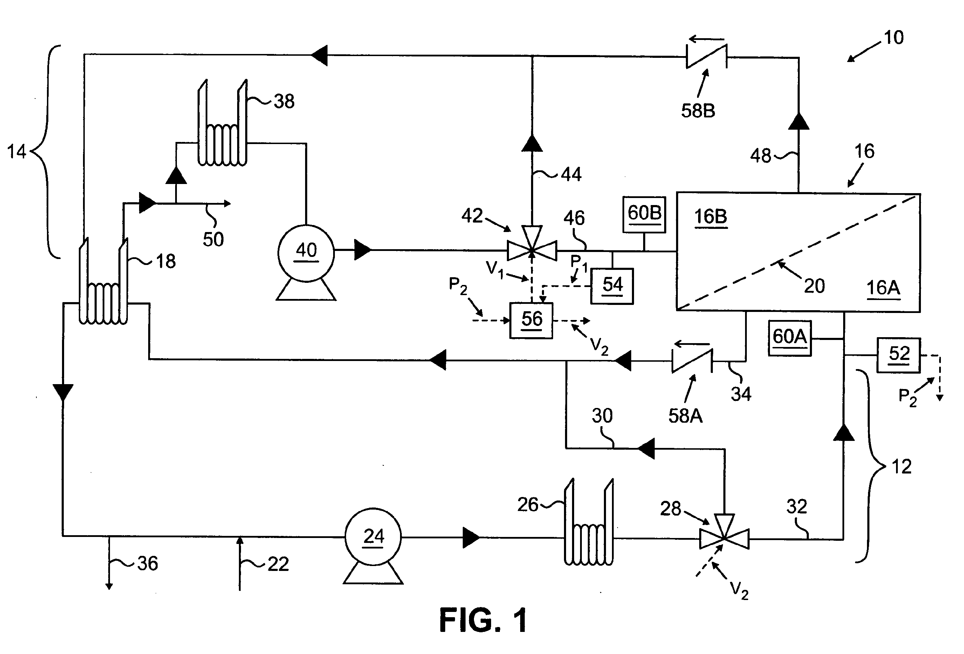

FIG. 1 is a schematic illustration of membrane distillation system 10, which includes brine loop 12, distillate loop 14, membrane distillation module 16 and recuperating heat exchanger 18, and is a suitable system for separating a distillate from a brine solution. As discussed below, brine loop 12 delivers heated brine solution to membrane distillation module 16. Also as discussed below, distillate loop 14 removes distillate from membrane distillation module 16 and recirculates cooled distillate to membrane distillation module 16. The combination of the cooled distillate and heated brine solution delivered to membrane distillation module 16 creates temperature differentials within membrane distillation module 16. The temperature differentials create corresponding vapor pressure differentials. The vapor pressure differentials drive separation of distillate from the brine solution across membranes in membrane distillation module 16. Brine loop 12 and distillate loop 14 are configured to deliver heated brine solution and cooled distillate to membrane distillation module 16 with pressure control so that brine solution and distillate do not penetrate the pores of membranes in membrane distillation module 16.

Membrane distillation module 16 is a module containing one or more membranes (not shown in FIG. 1) for membrane distillation. In some embodiments of membrane distillation systems 10, hollow tube membranes are used. In other embodiments, flat sheet membranes are used. Membranes are generally formed from one or more hydrophobic materials and include a plurality of micropores that allow the transmission of gases and vapors, but restrict the flow of liquids and solids. This allows evaporated distillate to separate from brine solution via vapor pressure transport. Examples of suitable materials for membranes include hydrophobic polymeric materials, such as polypropylenes, polyethylenes, polytetrafluoroethylenes, polyvinylidene difluorides, Halar® ECTFE (ethylene chlorotrifluoroethylene, available from Solvay Solexis, Brussels, Belgium) and combinations thereof. Other suitable materials may include non-hydrophobic polymer materials, such as polysulfones, polyethersulfones, and polyimides that are coated with hydrophobic material(s). Additional descriptions of membranes used in membrane distillation can be found in U.S. Patent Application Publication Nos. US 2009/0152184 A1 and US 2009/0152199 A1, the subject matter of which is incorporated by reference.

The membranes of membrane distillation module 16 provide for a range of flux during operation of membrane distillation system 10. While the flux of membrane distillation module 16 depends on temperatures, flow rates and membrane geometries, an exemplary embodiment of membrane distillation system 10 includes membrane distillation module 16 with a flux between about 2 L·m⁻².hr⁻¹ and about 50 L·M⁻²·-hr⁻¹. An even more exemplary embodiment includes membrane distillation module 16 with a flux between about 5 L·m⁻²·hr⁻¹ and about 20 L·m⁻²·hr⁻¹.

Membrane distillation module 16 is in fluid communication with both brine loop 12 and distillate loop 14. Membrane distillation module 16 includes brine side 16A and distillate side 16B. Brine loop 12 is in fluid communication with brine side 16A and distillate loop 14 is in fluid communication with distillate side 16B. One or more membranes (represented by dashed line 20) separate membrane distillation module 16 into the two sides 16A, 16B. During controlled operation, vapor transmits from brine side 16A to distillate side 16B across the one or more membranes 20; no other gaseous or liquid transport occurs.

Brine loop 12 is a fluid pathway for brine solution, and includes brine inlet 22, brine pump 24, heat exchanger 26, brine valve 28, brine bypass 30, brine delivery line 32, brine return line 34 and brine outlet 36. According to the embodiment illustrated in FIG. 1, brine solution travels through brine loop 12 in a generally counterclockwise direction. Initial and additional brine solution is introduced into brine loop 12 by brine inlet 22. Brine pump 24 is a fluid pump configured to deliver brine solution through brine loop 12 and to membrane distillation module 16. Heat exchanger 26 is a heating heat exchanger and heats brine solution as it passes through heat exchanger 26. In one embodiment, brine valve 28 is a three-way valve. In another embodiment, brine valve 28 is a system of valves. Brine valve 28 allows passage of brine solution to brine bypass 30 and brine delivery line 32. Brine bypass 30 allows brine solution to bypass membrane distillation module 16 and continue through brine loop 12 without entering membrane distillation module 16. Brine delivery line 32 connects brine valve 28 and membrane distillation module 16. Brine solution flowing through brine delivery line 32 is delivered to membrane distillation module 16. Brine return line 34 allows brine solution leaving membrane distillation module 16 to reenter brine loop 12. Brine solution is removed from brine loop 12 by brine outlet 36, when necessary.

Brine valve 28 regulates the flow of brine solution to brine bypass 30 and brine delivery line 32. Brine solution directed through brine bypass 30 does not flow through membrane distillation module 16; brine solution directed through brine delivery line 32 does flow through membrane distillation module 16. Thus, brine valve 28 regulates whether, and to what extent, brine solution is delivered to membrane distillation module 16. By regulating the amount of brine solution delivered to membrane distillation module 16, liquid pressure on brine side 16A of membranes 20 in membrane distillation module 16 can be controlled. If the liquid pressure on brine side 16A is below a first threshold level, additional brine solution can be delivered to brine delivery line 32 by brine valve 28. If the liquid pressure on brine side 16A increases above a second threshold level or approaches the liquid penetration pressure of membranes 20, additional brine solution is diverted from brine delivery line 32; brine valve 28 delivers additional brine solution to brine bypass 30.

Distillate loop 14 is a fluid pathway for distillate, and includes heat exchanger 38, distillate pump 40, distillate valve 42, distillate bypass 44, distillate delivery line 46, distillate return line 48 and distillate outlet 50. According the embodiment illustrated in FIG. 1, distillate travels through distillate loop 14 in a generally counterclockwise direction. Heat exchanger 38 is a cooling heat exchanger and cools distillate as it passes through heat exchanger 38. Distillate pump 40 is a fluid pump configured to deliver distillate through distillate loop 14 and to membrane distillation module 16. In one embodiment, distillate valve 42 is a three-way valve. In another embodiment, distillate valve 42 is a system of valves. Distillate valve 42 allows passage of distillate to distillate bypass 44 and distillate delivery line 46. Distillate bypass 44 allows distillate to bypass membrane distillation module 16 and continue through distillate loop 14 without entering membrane distillation module 16. Distillate delivery line 46 connects distillate valve 42 and membrane distillation module 16. Distillate flowing through distillate delivery line 46 is delivered to membrane distillation module 16. Distillate return line 48 allows distillate leaving membrane distillation module 16 to reenter distillate loop 14. Distillate is removed from distillate loop 14 by distillate outlet 50.

Distillate valve 42 regulates the flow of distillate to distillate bypass 44 and distillate delivery line 46. Distillate directed through distillate bypass 44 does not flow through membrane distillation module 16; distillate directed through distillate delivery line 46 does flow through membrane distillation module 16. Thus, distillate valve 42 regulates whether, and to what extent, distillate is delivered to membrane distillation module 16. By regulating the amount of distillate delivered to membrane distillation module 16, liquid pressure on distillate side 16B of membranes 20 in membrane distillation module 16 can be controlled. If the liquid pressure on distillate side 16B is below a first threshold level, additional distillate can be delivered to distillate delivery line 46 by distillate valve 42. If the liquid pressure on distillate side 16B increases above a second threshold level or approaches the liquid penetration pressure of membranes 20, additional distillate is diverted from distillate delivery line 46; distillate valve 42 delivers additional distillate to distillate bypass 44.

Recuperating heat exchanger 18 is in fluid communication with both brine loop 12 and distillate loop 14. In recuperating heat exchanger 18, thermal energy is transferred from the distillate to the brine solution. The distillate, having been heated by condensation of the vapor transmitted from the brine solution, is generally warmer than the brine solution, which has already transferred thermal energy to the distillate in membrane distillation module 16. The energy transfer in recuperating heat exchanger 18 pre-cools the distillate before it is cooled by heat exchanger 38 and pre-heats the brine solution before it is heated by heat exchanger 26.

Brine valve 28 regulates the flow of brine solution to membrane distillation module 16 through brine loop 12. Distillate valve 42 regulates the flow of distillate to membrane distillation module 16 through distillate loop 14. In exemplary embodiments of membrane distillation system 10, flow regulation by brine valve 28 and distillate valve 42 is automated. Pressure sensors are used to automate the regulation process. In one embodiment, pressure sensors located in membrane distillation module 16 determine liquid pressures on brine side 16A and distillate side 16B of membrane distillation module 16. In another embodiment, pressure sensors are located in brine loop 12 and distillate loop 14. In FIG. 1, brine pressure sensor 52 is shown located in brine delivery line 32. Brine pressure sensor 52 measures the pressure in brine loop 12. Distillate pressure sensor 54 is shown located between in distillate delivery line 46. Distillate pressure sensor 54 measures the pressure in distillate loop 14.

Controller 56 receives pressure output information P₁, P₂ from pressure sensors 52, 54 or pressure sensors in membrane distillation module 16. Depending on the pressure output information received, controller 56 delivers valve positioning instructions V₁, V₂ to brine valve 28 and distillate valve 42. Valve positioning instructions V₁, V₂ instruct brine valve 28 and distillate valve 42 to increase or decrease fluid delivery to membrane module 16 and bypasses 30 and 44. Thus, controller 56 regulates the flow of brine and distillate through brine valve 28 and distillate valve 42, respectively. For example, if the pressure in brine loop 12 increases, brine pressure sensor 52 detects the pressure increase and sends corresponding pressure output information P₂ to controller 56. Controller 56 delivers flow instructions V₂ to brine valve 28 instructing it to deliver more brine solution through brine bypass 30 and less brine solution through brine delivery line 32 until the pressure is reduced to normal levels.

In one embodiment of membrane distillation system 10, brine valve 28 and distillate valve 42 are three-way valves capable of controlling the flow of fluids. Three-way brine valve 28 and distillate valve 42 control the respective flows of brine and distillate using a single valve. Suitable three-way valves include ball valves, plug valves and rotor valves. In another embodiment, brine valve 28 and distillate valve 42 are valve systems containing more than one valve. For example, in one embodiment, a brine feed line from heat exchanger 26 splits into two branches, one branch for brine bypass 30 and one branch for brine delivery line 32. Each branch contains a valve for regulating brine solution flow through the branch. If the valve of one branch is closed, brine solution flows through the other branch. Suitable valves for use in valve systems include ball valves, butterfly valves, plug valves, pneumatic actuated valves, electrically-operated valves, globe valves and combinations thereof.

Some embodiments of membrane distillation system 10 also include check valves 58 to further control flow and pressure in brine loop 12, distillate loop 14 and membrane distillation module 16. A check valve generally allows fluids to flow through the valve in only one direction. Typically, a threshold back pressure is required to activate a check valve. Once that threshold is reached, the check valve prevents fluid from flowing backwards through the check valve. Thus, check valves prevent fluid backflow that can cause an increase in pressure or pressure surges. In one embodiment, check valves 58 are located on inlet and outlet lines of membrane distillation module 16. As illustrated in FIG. 1, check valves 58A and 58B are located on brine return line 34 and distillate return line 48, respectively. Check valve 58A prevents brine solution delivered to brine return line 34 and through check valve 58A from flowing back towards membrane distillation module 16. Thus, check valve 58A prevents a backflow of brine from causing a rise in pressure on brine side 16A. Similarly, check valve 58B prevents distillate delivered to distillate return line 48 and through check valve 58B from flowing back towards membrane distillation module 16. Check valve 58B prevents a backflow of distillate from causing a rise in pressure on distillate side 16B. Together, check valves 58 provide additional control over the flow of brine solution and distillate and the pressures exerted on membranes 20 of membrane distillation module 16.

Some embodiments of membrane distillation system 10 also include pressure dampers 60. Pressure dampers 60 redirect pressure surges produced by brine pump 24 and distillate pump 40 away from membranes 20 of membrane distillation module 16. In one embodiment, pressure damper 60A is located on feed delivery line 32 near membrane distillation module 16 and pressure damper 60B is located on distillate delivery line 46 near membrane distillation module 16. Pressure dampers 60A and 60B are in communication with feed delivery line 32 and distillate delivery line 46, respectively. Pressure dampers 60 contain a pocket of compressible fluid, such as air, separated from the brine solution or distillate by a diaphragm or bladder. When the pressure of the brine solution or distillate increases during a pressure surge, the brine solution or distillate exerts force on the diaphragm or bladder and the compressible fluid compresses to absorb (dampen) some of the additional pressure. Pressure dampers 60 offer membrane distillation system 10 additional protection against pressure surges.

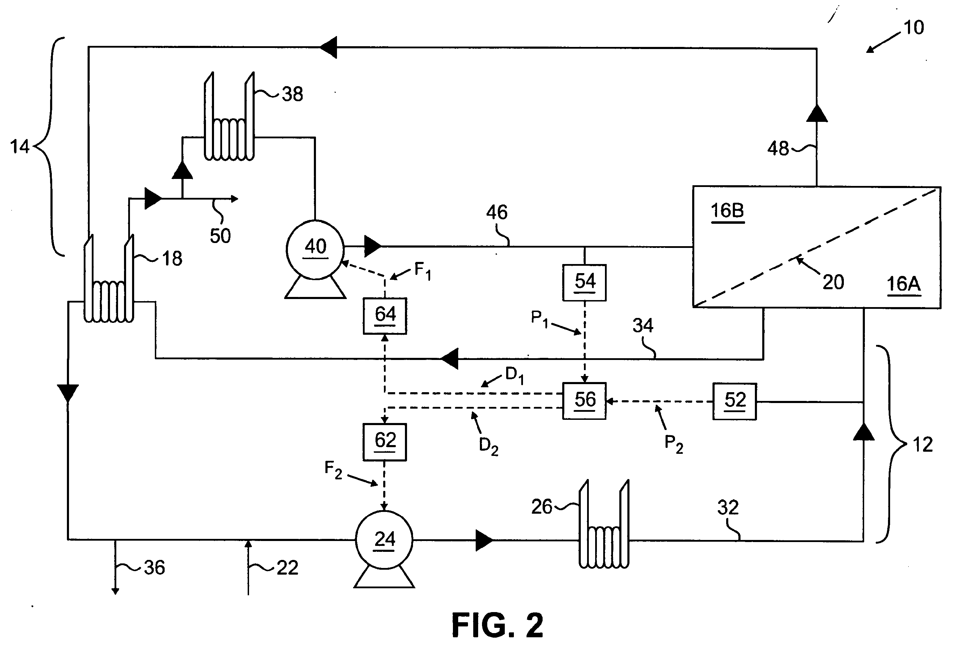

In an alternate embodiment of membrane distillation system 10, variable frequency drive (VFD) pumps are used in place of the system of valves and bypasses. VFD pumps are capable of altering pumping pressure to compensate for downstream pressures of the fluids they pump. For example, if downstream fluid pressure is high or a pressure surge is detected, the VFD pump reduces the pump speed and therefore reduces the fluid flow rate which will reduce the downstream fluid pressure. FIG. 2 illustrates an embodiment of membrane distillation system 10 having VFD pumps. VFD pumps could also be used in the embodiment illustrated in FIG. 1. In an embodiment where brine pump 24 and distillate pump 40 are VFD pumps, brine valve 28, brine bypass 30, distillate valve 42 and distillate bypass 44 are optional but not required.

In the embodiment of FIG. 2, VFD brine pump 24 regulates the pressure of brine solution on brine side 16A. When pressure on brine side 16A increases beyond a threshold level, VFD brine pump 24 reduces the pressure at which it pumps brine solution through brine loop 12. Once the brine side 16A pressure falls to a predetermined level, VFD brine pump 24 gradually increases the flow of brine solution to membrane module 16 until the brine side 16A pressure returns to a normal operating state. Like the embodiment illustrated in FIG. 1, brine pressure sensor 52 detects the pressure of the brine solution on brine side 16A and sends corresponding pressure output information P₂ to controller 56. Controller 56 delivers drive instructions D₂ to brine variable frequency drive (VFD) 62 instructing it to increase or decrease flow, and therefore pumping pressure. Brine VFD 62 in turn regulates the pumping pressure of brine pump 24. VFD distillate pump 40 operates in a similar fashion in distillate loop 14. Distillate loop 14 contains distillate pressure sensor 54, controller 56 and distillate VFD 64. In this embodiment, pressure in membrane distillation system 10 is regulated by directly changing fluid pumping pressures rather than regulating valves and bypasses.

In order to function properly, membrane distillation system 10 requires pressure control. Liquid pressures on brine side 16A and distillate side 16B of membrane distillation module 16 need to be maintained within a narrow pressure range during operation. Exemplary embodiments of membrane distillation system 10 provide for controlled pressures on brine side 16A and distillate side 16B less than about 50 psig (345 kPa). In some exemplary embodiments, brine solution and distillate exert pressures less than about 25 psig (172 kPa) on brine side 16A and distillate side 16B, respectively. The narrow range of pressures is required to prevent brine solution or distillate from penetrating membranes 20 within membrane distillation module 16.

The general operation of one embodiment of membrane distillation system 10 is described below. Prior to membrane distillation, brine pump 24 and distillate pump 40 are activated to pump brine solution through brine loop 12 and distillate through distillate loop 14. Since no distillate has been generated at this point, purified water or earlier-acquired distillate is added to distillate loop 14. The purified water or early-acquired distillate is hereinafter referred to as "distillate". Brine valve 28 is configured to direct all of the brine solution pumped through brine loop 12 through brine bypass 30. Brine solution is not yet delivered to brine delivery line 32 or membrane distillation module 16. Distillate valve 42 is configured to direct all of the distillate pumped through distillate loop 14 through distillate bypass 44. The distillate is not yet delivered to distillate delivery line 46 or membrane distillation module 16. Once brine pump 24 and distillate pump 40 are recirculating the respective brine solution and distillate, heat exchangers 26 and 38 are activated. Heat exchanger 26 heats brine solution in brine feed loop 12 and heat exchanger 38 cools distillate in distillate loop 14. To reduce energy expenditure, the brine solution and distillate bypass (not shown in FIG. 1) recuperating heat exchanger 18.

Once the brine solution and the distillate reach their desired temperatures, brine solution and distillate are gradually delivered to membrane distillation module 16. Brine valve 28 delivers brine solution to brine delivery line 32 incrementally. Initially, only a small amount of brine solution is directed to brine delivery line 32. The amount of brine solution directed to brine delivery line 32 and membrane distillation module 16 is gradually increased until a predetermined pressure, below the liquid penetration pressure of membranes 20, is reached. At the same time, distillate valve 42 delivers distillate to distillate delivery line 46 incrementally. Initially, only a small amount of distillate is directed to distillate delivery line 46. The amount of distillate directed to distillate delivery line 46 and membrane distillation module 16 is gradually increased until a predetermined pressure, below the liquid penetration pressure of membranes 20, is reached.

Once brine solution is directed to brine delivery line 32 and membrane distillation module 16, distillation occurs within membrane distillation module 16. Vapor from the brine solution transmits across membranes 20 from brine side 16A to distillate side 16B. Distillate and brine solution are delivered to recuperating heat exchanger 18, and recuperating heat exchanger 18 transfers thermal energy from the distillate to the brine solution.

In an alternative embodiment, prior to membrane distillation, brine pump 24 and distillate pump 40 are activated to pump brine solution through brine loop 12 and distillate through distillate loop 14. Before heating the brine solution and cooling the distillate, brine solution and distillate are gradually delivered to membrane distillation module 16. Flow of brine solution and distillate to membrane distillation module 16 is increased until a predetermined pressure, below the liquid penetration pressure of membranes 20, is reached. Once brine pump 24 and distillate pump 40 are recirculating the respective brine solution and distillate at steady pressures, heat exchangers 26 and 38 are activated. As brine solution in brine loop 12 is heated and distillate in distillate loop 14 is cooled, flows of brine solution and distillate are adjusted to provide optimal pressures on loop side 16A and distillate side 16B in membrane distillation module 16. In this embodiment, distillation occurs within membrane distillation module 16 early in the process, but does not reach optimal efficiency until the brine solution is heated and the distillate is cooled. This alternative embodiment may also include pressure dampers 60.

A similar operation is used for membrane distillation systems 10 having VFD pumps, such as the embodiment illustrated in FIG. 2. Brine solution and distillate are delivered to membrane distillation module 16 at a low pressure initially. Once brine VFD pump 24 and distillate VFD pump 40 are recirculating the respective brine solution and distillate at steady pressures, heat exchangers 26 and 38 are activated. As brine solution in brine loop 12 is heated and distillate in distillate loop 14 is cooled, the pump speeds, and therefore the flow rates of brine solution and distillate, are adjusted to provide optimal pressures on brine side 16A and distillate side 16B in membrane distillation module 16.

During membrane distillation, pressure spikes or surges can occur in membrane distillation module 16. For example, temporarily blocked membrane module pore channels may gradually increase the pressure or cause a rapid pressure surge on brine side 16A. If brine solution continues to be delivered to membrane distillation module 16 at its current rate, the pressure on brine side 16A may exceed the membrane's liquid penetration pressure and cause contamination or other problems. To compensate for the increased pressure on brine side 16A, brine valve 28 diverts a portion of the brine solution flow to brine bypass 30. A portion of brine solution is diverted to brine bypass 30 until the pressure on brine side 16A returns to a normal level. The amount of brine solution diverted to brine bypass 30 is then returned to brine delivery line 32. A similar portioning and diversion of distillate is performed when the pressure rises or a pressure surge occurs on distillate side 16B. Alternatively, VFD pumps 24 and 40 reduce pumping pressure of the brine solution or distillate until the pressures on brine side 16A or 16B return to normal levels. In exemplary embodiments of membrane distillation system 10, pressure sensor 52 in brine loop 12 and pressure sensor 54 in distillate loop 14 or pressure sensors in membrane distillation module 16 allow for near instantaneous diversion or reduced pumping of brine solution and distillate to prevent pressure surges and the corresponding liquid penetration of membranes 20 in membrane distillation module 16.

In summary, the present invention relates to a system and method for controlling pressure during membrane distillation. Pressure surges can result in detrimental liquid penetration of distillation membranes. One embodiment of a membrane distillation system has bypasses and valves for regulating flow of brine solution and distillate to reduce or eliminate problems associated with pressure surges. Other embodiments use variable frequency drive pumps to regulate flow of brine solution and distillate.

Although the present invention has been described with reference to exemplary embodiments, workers skilled in the art will recognize that changes may be made in form and detail without departing from the scope of the invention.

## Claims

1. A membrane distillation system (10) comprising:
a membrane distillation module (16) having a membrane (20) for separating distillate from a brine solution, wherein the membrane (20) separates the membrane distillation module (16) into a brine side (16A) and a distillate side (16B);
a brine loop (12) for delivering brine solution to and receiving brine solution from the brine side (16A) of the membrane distillation module (16) comprising:
a brine pump (24) for pumping brine solution through the brine loop (12); a heating heat exchanger (26) for heating brine solution; and
means for regulating pressure on the brine side (16A) during system startup, system operation and system stoppage;
a distillate loop (14) for delivering distillate to and receiving distillate from the distillate side (16B) of the membrane distillation module (16) comprising:
a distillate pump (40) for pumping distillate through the distillate loop;
a cooling heat exchanger (38) for cooling distillate; and
means for regulating pressure on the distillate side (16B) during system startup, system operation and system stoppage; and
a recuperating heat exchanger (18) in fluid communication with the brine loop (12) and the distillate loop (14), wherein the recuperating heat exchanger (18) is configured to transfer thermal energy from distillate to the brine solution.

2. The membrane distillation system of claim 1, wherein means for regulating pressure on the brine side (16A) include a bypass (30), a valve (28) and a controller (56) and means for regulating pressure on the distillate side (16B) include a bypass (44), a valve (42) and the controller (56).

3. The membrane distillation system of claim 1, wherein means for regulating pressure on the brine side include a variable frequency drive (24) and a controller (56) and means for regulating pressure on the distillate side include a variable frequency drive (24) and the controller (56).

4. A membrane distillation system (10) comprising:
a membrane distillation module (16) having a membrane (20) for separating distillate from a brine solution;
a brine loop (12) for delivering brine solution to and receiving brine solution from the membrane distillation module (16) comprising:
a brine pump (24) for pumping brine solution through the brine loop (12); a heating heat exchanger (26) for heating brine solution;
a brine bypass (30) for allowing brine solution to flow through the brine loop (12) without entering the membrane distillation module (16); and
a brine valve (28) for regulating flow of brine solution to the membrane distillation module (16) and the brine bypass (30), wherein the brine valve (28) regulates brine solution pressure to prevent brine solution from penetrating the membrane (20) of the membrane distillation module (16);
a distillate loop (14) for delivering distillate to and receiving distillate from the
membrane distillation module (16) comprising:
a distillate pump (40) for pumping distillate through the distillate loop (14);
a cooling heat exchanger (38) for cooling distillate;
a distillate bypass (44) for allowing distillate to flow through the distillate loop (14) without entering the membrane distillation module (16); and
a distillate valve (42) for regulating flow of distillate to the membrane distillation module (16) and the distillate bypass (14), wherein the distillate valve (42) regulates pressure of distillate in the membrane distillation module (16); and
a recuperating heat exchanger (18) in fluid communication with the brine loop (12) and the distillate loop (14), wherein the recuperating heat exchanger (18) is configured to transfer thermal energy from distillate to the brine solution.

5. The membrane distillation system of claim 2 or 4, wherein the brine valve (28) and the distillate valve (42) are selected from the group consisting of ball valves, butterfly valves, plug valves, pneumatic actuated valves, electrically-operated valves, globe valves and combinations thereof.

6. The membrane distillation system of any preceding claim, wherein the brine loop (12) and the distillate loop (14) each further comprises a check valve (58A,58B).

7. The membrane distillation system of any preceding claim, wherein the brine loop (12) and the distillate loop (14) each further comprises a pressure sensor (52,54).

8. The membrane distillation system of claim 7 as dependent directly or indirectly upon claim 2 or 4, wherein the brine valve (28) and the distillate valve (42) regulate flow based on pressure outputs from the pressure sensors (52,54).

9. The membrane distillation system of claim 8, further comprising a controller (56) for receiving pressure outputs from the pressure sensors (52,54) and delivering flow instructions to the brine valve (28) and the distillate valve (42).

10. The membrane distillation system any preceding of claim, wherein the brine solution and the distillate within the membrane distillation module have pressures less than about 50 psig (345 kPa), for example less than about 25 psig (172 kPa).

11. The membrane distillation system of any preceding claim, wherein the membrane distillation module has a flux between about 2 L·m⁻²·hr⁻¹ and about 50 L·m⁻²·hr⁻¹, for example between about 5 L·m⁻²·hr⁻¹ and about 20 L·m⁻²·hr⁻¹.

12. The membrane distillation system of any preceding claim, wherein the brine loop (12) and the distillate loop (14) further comprise pressure dampers (60A,60B).

13. A method for membrane distillation, the method comprising:
delivering a brine solution through a brine loop (12) in fluid communication with a membrane distillation module (16), wherein the brine solution is delivered to the membrane distillation module (16) at a low pressure during a first mode;
delivering distillate through a distillate loop (14) in fluid communication with a membrane distillation module (16), wherein the distillate is delivered to the membrane distillation module (16) at a low pressure during a first mode;
heating the brine solution in the brine loop (12);
cooling the distillate in the distillate loop (14);
delivering a portion of heated brine solution to the membrane distillation module (16) during a second mode, wherein the pressure of heated brine solution delivered to the membrane distillation module (16) is adjusted to facilitate membrane distillation while preventing the heated brine solution from penetrating membranes (20) within the membrane distillation module (16);
delivering a portion of cooled distillate to the membrane distillation module (16) during a second mode, wherein the pressure of cooled distillate delivered to the membrane distillation module (16) is adjusted to facilitate membrane distillation while preventing the cooled distillate from penetrating membranes (20) within the membrane distillation module (16); and
separating distillate from the brine solution in the membrane distillation module (16).

14. The method of claim 13, wherein heated brine solution and distillate within the membrane distillation module have pressures less than about 50 psig (345 kPa), for example less than about 25 psig (172 kPa).

15. The method of claim 13 or 14, wherein delivery of the heated brine solution and the cooled distillate to the membrane distillation module (16) is regulated by valves (28,42) or by variable frequency drives (24,40).
